# EUROPEAN PATENT APPLICATION

(11) **EP 2 613 495 A1**
(43) Date of publication of application: **10.07.2013**
(21) Application number: 12150434.4
(22) Date of filing: 09.01.2012
(51) Int. Cl.: H04L 29/08, G06F 17/30, G06Q 10/00, G06Q 30/00

(54) **Method for determining digital content preferences of the user**

(71) Applicant: OÜ Eliko Tehnoloogia Arenduskeskus, 12618 Tallinn (EE)
(72) Inventor: Kuusik, Alar, 75201 Aruküla, Harjumaa (EE)
(74) Representative: Sarap, Margus

(57) **Abstract**

Method for determining digital content preferences of the user is combining content access logs with additional information representing user physical activity patterns. For additional information describing changes in user activity pattern recordings from different sensors, like accelerometer, tilt sensor, magnetometer, e-field sensor, etc. integrated into handheld device will be used. Certain typical sensor patterns present higher or lower user interest comparing to an average

## Description

### Technical Field

Present invention relates to the field of mobile equipment applications, more specifically to the field of solutions assessing the relevancy of digital contents (mainly text information but also photos, video, sound, text synthesized into speech, multimedia) presented to the user via mobile equipment and identifying the user's personal interests and, based on that, developing content recommendations and ranking particular content.

### Background Art

Several positioning-based software applications are known from prior art for conveying information on sights of interest, food and entertainment sites and other objects via mobile phones and smart phones. Widely known applications include positioning, map application and database system, based on the satellite communication, integrated into the mobile communication device, to which various service providers have added information about them. There are several well-known solutions of the kind. For example, United States patent application US 2009036145 A (ROSENBLUM ALAN J) 15.02.2009 describes a system and method for providing location aware digital content to a tourist. Described solution includes a portable communications device and positioning device, by which the location of the point of interest is identified and information on the object is delivered to the user. Examples of providing location aware digital content to the user include solutions described by international patent application WO 2009/083744 A (GIDEON D O O) 09.07.2009 and German patent application DE 10132714 A (GRUETTNER GERD) 28.05.2003 , which include solution comprising a mobile phone equipped with a user location positioning feature or electronic travel guide for communicating digital tourism information to the user. International patent application WO 2007/134508 A (LEE SHU TAK RAYMOND) 29.11.2007 describes an ontology-based tourism information system, including mobile device, location positioning instrument and information server.

The limitation of described solutions is that these (a) provide no feedback on whether received information did interest the user or not, (b) do no allow the user to receive personalized information according to interests in the further.

Interest mining is essential for profiling the user mainly for (a) providing targeted advertising, (b) monitoring the feedback of users (viewers, readers). Web server log analysis is a well-known method for observing the internet users' preferences. E-Commerce applications is one of the examples (N. Hoebel, R. V. Zicari, "Creating User Profiles of Web Visitors Using Zones, Weights and Actionsʺ, 2008 10th IEEE Conference on E-Commerce Technology and the Fifth IEEE Conference on Enterprise Computing, E-Commerce and E Services, pp. 190-197). In interest mining the occurrence of keywords in data packets is monitored in the electronic communication ( US 2010131335 A (ROH DONG-HYUN) 27.05.2010 , US 2009276377 A (CISCO TECH INC) 05.11.2009). Patent application US 2011072448 A (MOBITV INC) 24.03.2011 describes the implicit interest mining of the mobile user in case of media channels by measuring time from the beginning of media stream to stopping the stream ("stop", "new page/channel") by the user. It provides the possibility to monitor the mobile device sensors (location, movement) in order to identify also the user context, e.g. training situation. Existing interest mining methods based on the Access time (time when certain content, text or web page was presented on the screen for viewing) do not function well in case of a mobile user, as the content monitoring time is fragmented and the user attention/concentration level is not adequately assessed.

Various micromechanical and other sensors, e.g. camera, are used for controlling the mobile device in addition to keyboard, touch screen and voice commands. For example, by using the tilt sensor the screen view is changed according to whether the user holds the device in his hands horizontally or vertically. Also, various solutions are known that use the accelerometer, gyroscope, located in the mobile device for monitoring people's movement, e.g. for counting walking steps, identifying physical activity level (Zhou, H. and Hu, H. 2004. A Survey - Human Movement Tracking and Stroke Rehabilitation, TECHlVlCAL REPORT: CSM-420, University of Essex, ISSN 1744 - 8050*)* or using for some applications, e.g. for playing, in the mobile phone. It is known from prior art that the accelerometer has so far been used as part of the user interface for controlling the mobile device ( EP 1271288 A (NOKIA CORP) 02.01.2003 ). Accelerometer and other micromechanical sensors have been employed for determining user orientation and movement in the room to measure distance to the certain point of interest e.g exhibition artefact ( US 2010332324 A (MICROSOFT CORP) 30.12.2010 ). Camera has been used for tracking the movement trajectory of eyes in order to identify interesting areas of screen and actual viewing of the screen. The solution of user interest monitoring based on the camera is complicated and energy-consuming. There exist no solutions based on micromechanical sensors of mobile devices, which aim to monitor the user's digital content preference and attention.

### Summary of invention

The object of present invention is to provide a method for continuous assessing of the personal interest of the mobile device user regarding the read or viewed digital content, which allows receiving feedback on user preferences. For achieving the object of the invention a sensor integrated into the mobile device is used to continuously assess the user movement, mobile device position; temporal order of user's physical activity and device position change and, based on the sensor information, which changes in time, also user's behaviour pattern and, through that, interest towards digital content provided at given time is assessed. Method according to the invention is targeted for example at tourists acquiring information from the Internet via mobile device, but also at other users for a) assessing their interest towards specific digital content, as expressed by text, images and multimedia for the purpose of user pleasantness feedback; b) allowing to prepare user's personalised interest profile on the basis of preferred content.

Mobile devices used according to the method include for example mobile phones, smart phones, tablet PC-s, and other portable electronic devices. For example, accelerometer, magnetometer, electrostatic field sensor, tilt sensor or their combination is used as the detector identifying human movement, position or location. User's attention rate is identified either by sensor readings for the moment (mobile device position, intensity of user movement) or by temporal order of the sensor signal (device position change, order of changes in user movement intensity in time). Location information from satellite positioning systems, wireless communications transmitters, RFID tags may be employed as additional information. Web pages with descriptions of cultural heritage objects, information on entertainment and dining places, wikis and other service providers, or recorded digital textual or audiovisual information, for example, are used as digital media sources. By monitoring user preferences one can create user's personal interests profiles, which are stored either in a mobile device or in one or several servers. Information on user preferences that is gathered by mobile device sensors can be combined with user location, with information from public web pages and portals; user calendar and social networks information or combination of these sources can be employed. In selecting the best information for the user, e.g. during the Internet search engine query, the listing is sorted according to the existing user interests profile.

### Brief description of drawings

The present method will now be further described with reference to the annexed drawings.

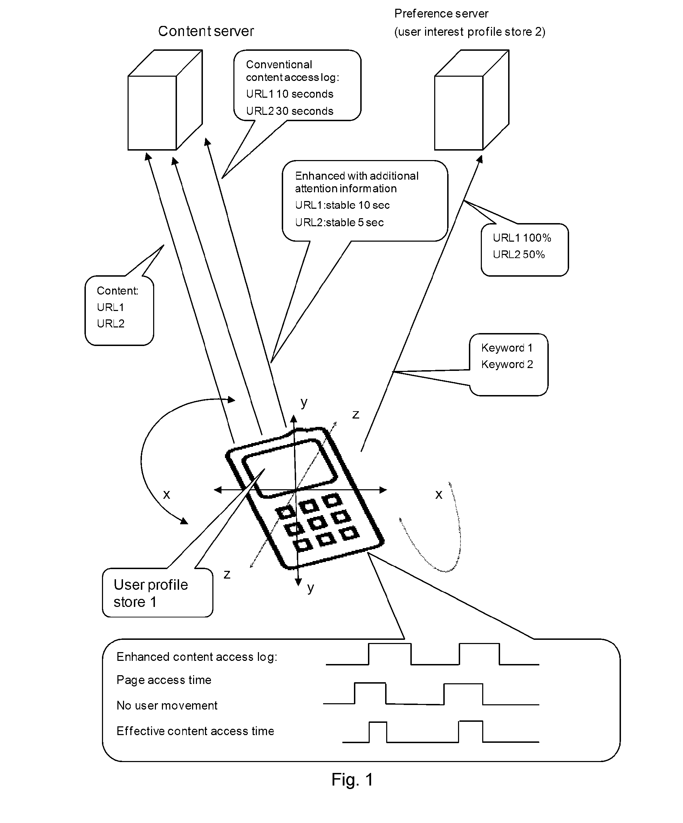

Figure 1 displays how the conventional Page Access log based website viewing time monitoring is corrected according to the activity information acquired from mobile device motion sensors. Data flow is transferred from Content server, e.g. web server, to the mobile device. Detected user active movement time is reported to content server as the period of little interest, which enables the online information provider to correct the server Access log for URL1 and URL2 of specific web pages and therefore acquire the interest feedback of users in more detail. Information on URL1, URL2 of visited web pages or other digital content along with adjusted Access Time describes the interests of specific user and it can be stored in a handheld device or in a Preference server. If keywords can be extracted from content or metadata accompanying the content, keywords 1 and 2 can be sent to the Preference server.

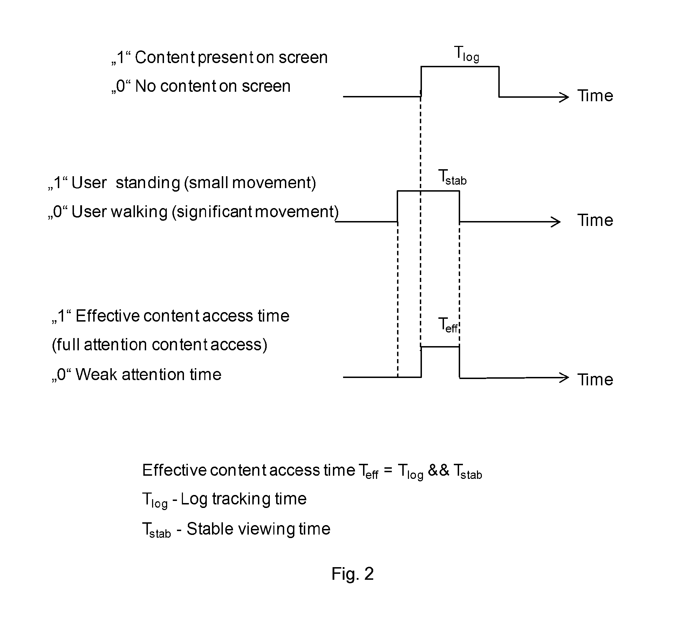

Figure 2 describes how the effective content access time (Teff) is obtained by multiplying the time of displaying content on the screen Tlog, which is measured by server or handheld device log, user physical stability coefficient Tstab, which is "1" if the user is motionless and the device screen is in the viewing position, and "0" if the screen is not viewed due to device position not suitable for viewing or user active movement. Tstab values between one and zero can be used depending on the movement intensity. Other mathematical relations can be employed for adjusting log time on the basis of movement intensity.

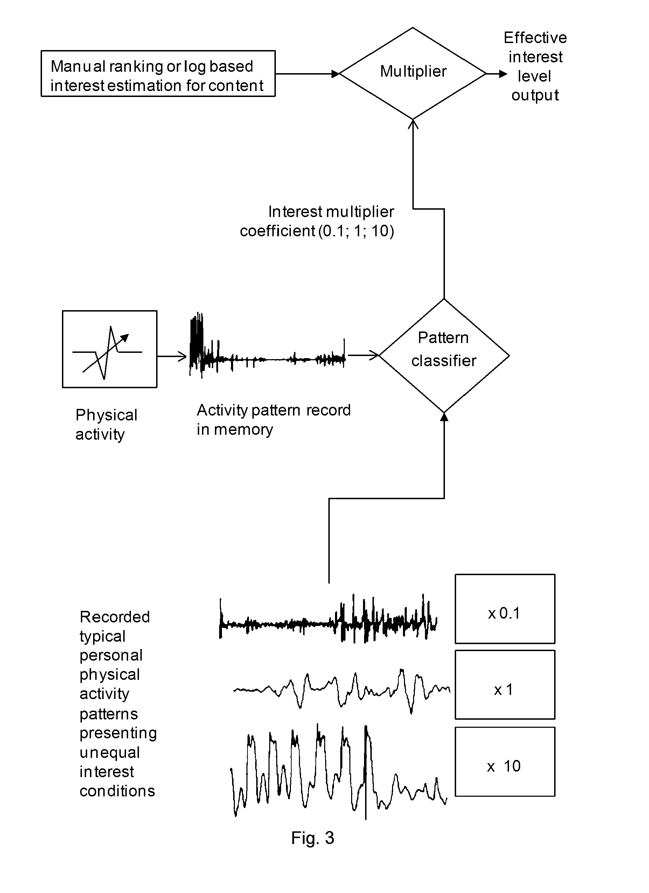

Figure 3 displays how previously recorded and assessed movement patterns can be used for adjusting the content interest assessment based on content access time logs or manual ranking. Personal physical activity patterns as movement sensor recordings indicating interest level of specific user, which characterise typical behaviour of the user at various interest rates, have been stored in the handheld device. Personal activity sensor patterns measured in real-time shall be compared with database stored patterns and content interest rate assessment is adjusted by received interest rate coefficient of similar pattern, simplified e.g. as attention multipliers 0.1, 1 or 10.

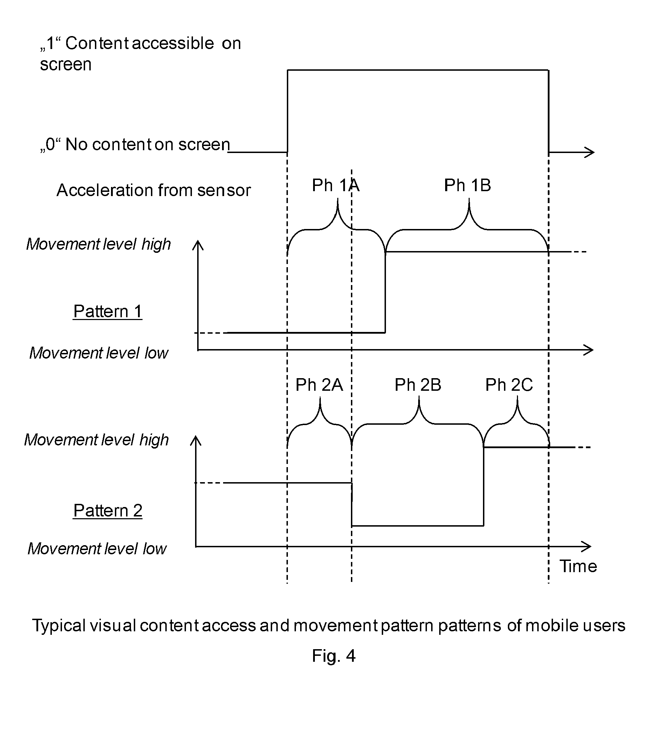

Figure 4 describes a method for detecting user's above-average interest towards certain content on the basis of motion detector signal, which is represented by Pattern 2. Pattern 1 characterises normal movement of the device, which is determined by the accelerometer signal: e.g. device stays relatively still in the initial phase Ph1A of displaying the web page, as that is a more convenient way to view the screen, corresponding to Tstab=1 phase of Figure 2, if the user interest decreases, it starts to move, which is detected by an increased accelerometer output signal amplitude. In that phase Ph1 B is Tstab=0. In Pattern 2 phase Ph2B the amplitude of the accelerometer signal has decreased when compared with the initial phase Ph2A, which illustrates the increase of user interest during the content access, contrary to the previous typical movement pattern.

### Description of embodiments

Method according to present invention for determining user preferences of digital content in a mobile device includes stages of transferring data flow from digital content source to the mobile device, monitoring user physical activity, calculating interest rate adjustment on the basis of movement information, delivering identified interest rate feedback to Content server and/or Preference server.

Based on consumer feedback, digital content providers e.g. website managers can enhance or replace their data; therefore user feedback is essential for them. Access log based monitoring methods are well known for web user interest monitoring, especially for travel and news industry. Server or host browser log monitoring used for ordinary desktop PC-s is insufficient for mobile user. Mobile user views screen information fragmentarily - walk, chats on a phone, while the web page connection stays still active. In these situations the assessment of feedback based on ordinary server logs would give a wrong judgment on user interests. With the method according to present invention the mobile device user interest in digital content is assessed and determined much more accurately. For example, it is possible to evaluate precisely what digital content was interesting during the walk for a museum visitor.

Based on the created user or user group profile the user is provided with suitable digital content and appropriate digital content presentation medium is determined for the user (e.g. text, text synthesis into sound, multimedia presentation). On the basis of received information the user is provided with suitable services (e.g. advertising, news, tourist information, information on entertainment, sports events and dining places, etc.) according to one's personal interests.

To get more appropriate content it is possible to create personal interest profiles to be stored on personal Internet Access device or remote Preference server. Profile data can be used for detailized/personalized Internet searches resulting in better matches. Content Access log-based profile building can be improved when physical activity information is taken into account. At first, effective content access time Teff can be measured. Additionally, based on experiments, certain common user movement patterns correctly indicate high interest level, which cannot be detected through the Access log-based measurements. Additionally, it is possible to record typical activity sensor patterns indicating interest range for a particular user.

For personalized content selection in a mobile device a user interest profile is created, which includes, for example, user interests, interests in digital content, preferences of the manner of presenting digital content. In one or several central profile servers a user interest profile is created, which includes, for example, user interests, interests in digital content and preferences of the manner of presenting digital content.

For monitoring user attention and interest in digital content a sensor (e.g. accelerometer, tilt sensor, magnetometer, location change, switching on and off of screen backlight, clock or any other quantifiable parameter related to the mobile device use, like applications operating in the mobile device, including phone calls) integrated into the mobile device is used, whereas at least one sensor is used simultaneously or, depending on the user's location and activities, various sensors are combined. Interest rate is assessed by a pattern of temporal changes of current values or sensor readings of one or several sensors.

In the preferred embodiment of current invention, for example, the mobile phone or smart phone or tablet PC is equipped with tilt sensor/accelerometer and/or magnetometer, electrostatic field change sensor. The sensor allows detecting whether user stands still or moves, and in which position the device is held by a user. According to test results, user prefers to view visual digital information, e.g. video or text information, without moving. Increased physical activity describes decreased interest and allows adjusting content ranking defined by logs. Real (effective) visual content access time Teff can be obtained by subtracting user's significant physical activity time Tmov from the time of displaying content on the screen Tlog, which is measured from the server or handheld device Access log. It is possible to use 'content Access' stability multiplier Tstab with a value between zero and one, which characterises how motionless, or, how attentively the user follows the content at given time. Physical activity level will be determined through the magnitude of movement sensor readings or external user positioning information. Larger magnitude of movement sensor readings correlate with low interest of the user. Device reading position will be determined by tilt sensing devices.

On the basis of information obtained by monitoring user attention and interest with regard to digital content typical movement/activity sensor patterns of the user are stored in the mobile device, reflecting typical user behaviour accessing content with different interest level. The classifying of typical patterns will be done using external information like questionnaires and behaviour learning methods. Different typical content access patterns for particular user, e.g. focused access period Ph1A (Fig 4) divided by full content access time Ph1A+Ph1B characterize Interest multiplier parameter, which can be used for interest level evaluation. Signal processing techniques may be applied to compress typical physical activity sensor patterns. Semantic data mining methods can be used to extract interest keywords from the content to be used for personal preference profile building.

Based on experiments certain human movement patterns indicate increased interest level of typical users. In figure 5 Pattern 2 phase Ph2B the amplitude of the accelerometer signal has decreased when compared with the initial phase Ph2A, which illustrates the increase of user interest level during the content access process. Based on conducted user questionnaires such physical activity patterns correlate well with above average explicit ranking feedback. Pattern two (2) type activity behaviour can be used for implicit detection of the high level of user interest.

## Claims

1. Method for determining digital content preferences of the user via mobile device, comprising the stages of transferring data from the source of digital content to mobile device, monitoring movements of mobile device, metering content access time on mobile device or server, calculating adjusted user interest level, delivering obtained interest level information to the content server and/or user profile store, **characterised by** that the conventional content access log is processed together with additional information measured and stored in temporal order, which either raises or lowers the initial interest level ranking.

2. Method according to claim 1, **characterised by** that temporal order signals of user's physical activity received from the sensor integrated into mobile device are used as the additional information adjusting the digital content ranking.

3. Method according to claim 1, **characterised by** that the signals of the intensity of user's physical activity, which change in time, received from the sensor integrated into mobile device are used as the additional information adjusting the digital content ranking.

4. Method according to claims 2 and 3, **characterised by** that the linear and/or angular accelerometer is used as the sensor of the change of user's physical activity.

5. Method according to claims 2 and 3, **characterised by** that the magnetometer or electrostatic field sensor are used as sensors of the change of user's physical activity.

6. Method according to claims 2 and 3, **characterised by** that the tilt sensor is used as the sensor of the change of user's physical activity.

7. Method according to claims 2 and 3, **characterised by** that the applications operating in the mobile device of the user are used as the sensor of the change of user's physical activity.

8. Method according to claims 2 and 3, **characterised by** that identifying movement by the change of the mobile device location is used as the sensor of the change of user's physical activity.

9. Method according to claims 2 and 3, **characterised by** that switching on and off of the screen backlight is used as the sensor of the change of user's physical activity.

10. Method according to claims 4 to 8, **characterised by** that at least the combination of two sensors is used as the sensor of the change of user's physical activity.

11. Method according to claims 1 to 9, **characterised by** that the time of user's intense movement, is subtracted from the time of digital content use determined through the content access logs (e.g. server or browser log).

12. Method according to claims 1 to 9, **characterised by** that the time of the backlight switched-off mode and the time of the device position unsuitable for viewing is subtracted from the time of digital content use determined through the content access logs (e.g. server or browser log).

13. Method according to claims 2 and 3, **characterised by** that in adjusting the interest rate the user's temporal activity pattern in various time stages of content acquisition is compared with temporal activity patterns collected previously for the same user, describing varying level of interest.

14. Method according to claims 2 and 3, **characterised by** that during the content acquisition stage the stage of user's low physical activity Ph1A can be detected, which is followed by active movement stage Ph1 B, whereas the behaviour of the user with corresponding behaviour pattern is interpreted as low interest of the user in particular content.

15. Method according to claims 2 and 3, **characterised by** that during the content acquisition stage the primary stage Ph2A of user's physical activity Act can be detected, which is followed by a stage with lower physical activity Ph2B (Act(Ph2B)<Act(Ph2A)), which is followed by a final stage of higher activity Ph2C, whereas the behaviour of the user with corresponding behaviour pattern is interpreted as increased interest of the user in particular content.

16. Method according to claims 1 to 13, **characterised by** that the physical activity patterns characterising the user's interest rate are used as a part of the user's interest profile, stored in a mobile device.

17. Method according to claims 1 to 13, **characterised by** that the physical activity patterns characterising the user's interest rate are used as part of the user's interest profile, stored in an external server.
